# EUROPÄISCHE PATENTSCHRIFT

(11) **EP 2 134 663 B1**
(45) Veröffentlichungstag und Bekanntmachung des Hinweises auf die Patenterteilung: **27.03.2019**
(21) Anmeldenummer: 08748763.3
(22) Anmeldetag: 11.04.2008
(51) Int. Cl.: C01G 45/00, C01G 45/12, C01G 49/00, C01G 53/00, C04B 35/01, C04B 35/36, C04B 35/28, C04B 35/626, H01M 8/0208, H01M 8/0228, H01M 8/124, C04B 35/26

(54) **SCHUTZSCHICHTEN AUF HOCHTEMPERATURBELASTBAREN, CHROMOXIDBILDENDEN SUBSTRATEN, UND VERFAHREN ZU DEREN HERSTELLUNG**
PROTECTIVE COATINGS ON HIGH TEMPERATURE-RESISTANT CHROMIUM OXIDE-FORMING SUBSTRATES, AND METHOD FOR THE PRODUCTION THEREOF
COUCHES DE PROTECTION SUR DES SUBSTRATS RÉSISTANT AUX TEMPÉRATURES ÉLEVÉES, FORMANT DE L'OXYDE DE CHROME, ET PROCÉDÉ DE FABRICATION DE CES COUCHES

(30) Priorität: 13.04.2007 DE 102007018261
(43) Veröffentlichungstag der Anmeldung: 23.12.2009
(73) Patentinhaber: Fraunhofer-Gesellschaft zur Förderung der angewandten Forschung e.V., 80686 München (DE)
(72) Erfinder: KUSNEZOFF, Mihails, 01309 Dresden (DE); SAUCHUK, Viktar, 01069 Dresden (DE); TROFIMENKO, Nikolai, 01069 Dresden (DE)
(74) Vertreter: Pfenning, Meinig & Partner mbB
(86) Internationale Anmeldenummer: PCT/DE2008/000685
(87) Internationale Veröffentlichungsnummer: WO 2008/125103

(56) Entgegenhaltungen:
- WO-A-2006/059942
- DE-B- 1 109 077
- US-A- 5 942 349
- YANG ET AL: "(Mn,Co)3O4 spinel coatings on ferritic stainless steels for SOFC interconnect applications" INTERNATIONAL JOURNAL OF HYDROGEN ENERGY, ELSEVIER SCIENCE PUBLISHERS B.V., BARKING, GB, Bd. 32, Nr. 16, 12. Oktober 2006 (2006-10-12), Seiten 3648-3654, XP022350367
- ZHENGUO YANG ET AL: "Investigation of modified Ni-Cr-Mn base alloys for SOFC interconnect applications" JOURNAL OF THE ELECTROCHEMICAL SOCIETY ELECTROCHEM. SOC USA, Bd. 153, Nr. 10, Oktober 2006 (2006-10), Seiten A1873-A1879, XP002518208 ISSN: 0013-4651
- BODAK O ET AL: "Microstructure, crystal structure and electrical properties of Cu0.1Ni0.8Co0.2Mn1.9O4 ceramics obtained at different sintering conditions" JOURNAL OF ALLOYS AND COMPOUNDS, ELSEVIER SEQUOIA, LAUSANNE, CH, Bd. 347, Nr. 1-2, 16. Dezember 2002 (2002-12-16), Seiten 14-23, XP004392714 ISSN: 0925-8388
- LING H ET AL: "Electrical and thermal properties of spinels" PROCEEDINGS - ELECTROCHEMICAL SOCIETY - SOLID OXIDE FUEL CELLS IX, SOFC IX: MATERIALS - PROCEEDINGS OF THE INTERNATIONAL SYMPOSIUM 2005 ELECTROCHEMICAL SOCIETY INC. US, Bd. PV 2005-07, 2005, Seiten 1866-1873, XP008103001
- CAFFIN, J. P. ET AL: "Chemical preparation of N.T.C. thermistors with low resistivity and high stability" MATERIALS SCIENCE MONOGRAPHS , 38B(HIGH TECH CERAM., PT. B), 1743-51 CODEN: MSMODP; ISSN: 0166-6010, 1987, XP002518209
- AZIMI, S. ET AL: "Microstructure of nickel manganese oxide thermistors" MATERIALS SCIENCE MONOGRAPHS , 38B(HIGH TECH CERAM., PT. B), 1893-8 CODEN: MSMODP; ISSN: 0166-6010, 1987, XP008103003
- ROUMAIH KH ET AL: "Mossbauer studies of Cu1-xNixFeMnO4 spinel ferrites", JOURNAL OF MAGNETISM AND MAGNETIC MATERIALS, ELSEVIER SCIENCE PUBLISHERS, AMSTERDAM, NL, vol. 288, 1 March 2005 (2005-03-01), pages 267-275, XP027842318, ISSN: 0304-8853 [retrieved on 2005-03-01]
- S S Ata-Allah ET AL: "Mössbauer effect study of Ni 1-x Cu x Mn y Fe 2-y O 4 system", Hyperfine Interactions, 1 January 2000 (2000-01-01), pages 467-479, XP055312742, Retrieved from the Internet: URL:http://rd.springer.com/content/pdf/10. 1023/A:1012624808538.pdf

## Beschreibung

Die Erfindung betrifft ein Verfahren zur Ausbildung von Schutzschichten auf hochbelastbaren, chromoxidbildenden Substraten sowie eine mit dem Verfahren hergestellte Schutzschicht. Die Schutzschicht ist für eine Anwendung als Chromverdampfungsschutzschicht für chromhaltige metallische Legierungen im Hochtemperaturbereich geeignet.

Die erfindungsgemäße Schutzschicht ist insbesondere vorteilhaft für den Einsatz in Hochtemperaturbrennstoffzellen geeignet. Wie bereits zum Ausdruck gebracht, soll der Werkstoff bei hohen Temperaturen eingesetzt werden können, die im Bereich zwischen 550 und 1000° C liegen können.

Mit Hochtemperaturbrennstoffzellen ist eine direkte Umwandlung von chemischer in elektrische Energie möglich.

Dabei ist die Kathoden-Elektrolyt-Anoden-Einheit (KEA-Einheit) ein zentrales Funktionselement von Brennstoffzellen und besteht aus zwei Elektroden - Kathode und Anode - die durch einen sauerstoffleitenden Elektrolyt voneinander getrennt sind.

Um ein für technische Anwendungen akzeptables elektrisches Spannungsniveau zu erreichen, müssen Einzelzellen in Serie zusammengeschaltet werden. Zwischen diesen Einzelzellen müssen bei dem planaren Konzept die sogenannten Interkonnektoren bzw. Bipolarplatten eingebaut werden, mit denen die Gaszuführung zu den Elektroden und die Kontaktierung der Einzelzellen untereinander erfolgt.

Bei den hohen Temperaturen muss die Bipolarplatte möglichst gut elektrisch leitend und oxidationsbeständig sein. Außerdem soll der thermische Ausdehnungskoeffizient des metallischen Interkonnektors relativ klein sein um eine gute thermomechanische Kompatibilität mit den anderen Komponenten der Brennstoffzelle zu gewährleisten.

Wegen einer Vielzahl von Randbedingungen kommen für die Herstellung von Interkonnektoren nur sehr wenige Werkstoffe in Frage. Daher werden insbesondere für die Anwendungen in planaren Hochtemperaturbrennstoffzellen vorwiegend die Interkonnektorwerkstoffe in Betracht gezogen, die einen hohen Chromgehalt aufweisen, dies sind z.B. Chrombasislegierungen oder ferritische Stähle (chromhaltige Legierungen auf Eisenbasis) .

Mit diesen Werkstoffen ergibt sich aber das Problem, dass sich eine Chrom(III)-Oxidschicht (Cr₂O₃) auf der Oberfläche des Interkonnektors bei der erhöhten Betriebstemperatur unter einer dort vorliegenden oxidierenden Atmosphäre bildet.

Das Chromoxid reagiert bei erhöhten Temperaturen mit Sauerstoff und Wasserdampf unter Bildung von Chromtrioxid CrO₃ und Chromoxidhydroxiden CrO₂(OH)₂/CrO(OH)₄. Diese neu gebildeten chromhaltigen Verbindungen haben einen hohen Dampfdruck bei der Betriebstemperatur der Brennstoffzelle und können so leicht in die Kathode gelangen. Dort reagieren diese Cr-Spezies mit dem Kathodenmaterial, was zur Änderung seiner Zusammensetzung führt und langfristig die Verschlechterung der katalytischen Aktivität der Kathode bewirkt. Dies trägt erheblich zum Leistungsverlust der Brennstoffzelle bei.

Aus dem Stand der Technik sind unterschiedliche Werkstoffe und Verfahren für Verhinderung oder Minimierung der Chromverdampfung bekannt. Dabei erreichen die besten Ergebnisse Technologien, bei denen die Oberfläche der Interkonnektoren mit sogenannten Schutzschichten belegt wird.

So werden beispielsweise die Interkonnektoren mit lanthanhaltigen Werkstoffen wie LaCrO₃ beschichtet. Entweder wird die lanthanhaltige Verbindung wie LaCrO₃ direkt als Schutzschicht auf die Metalloberfläche aufgebracht oder es werden die Verbindungen wie La₂O₃, LaB₆ als reaktive Schichten aufgetragen, damit sie mit dem Chromoxid zu LaCrO₃ während des Betriebs reagieren. Dieses Verfahren hat den Nachteil, dass sich Mikrorisse in der LaCrO₃-Schicht bilden und somit diese keinen ausreichenden Schutz gegen die Chromverdampfung gewährleisten können.

Eine weitere Variante stellt die Beschichtung von Interkonnektoren mit chromfreien Perowskitschichten dar, die dem Kathodenmaterial ähnlich sind. Die Schichten dienen sowohl zum Schutz als auch zur Kathodenkontaktierung. Diese haben aber Nachteil, dass an der Grenze zwischen der Schicht und dem Interkonnektor eine neue chemische Verbindung auf Chrombasis gebildet und dort wachsen kann, die eine starke Degradation des Kontaktwiderstandes und in Folge dessen auch der Brennstoffzelle verursacht.

Spinellverbindungen an sich sind auch als wirksame Stoffe für Schutzschichten geeignet. Die Erzeugung von Spinellschutzschichten erfolgt entweder durch die Verwendung von Stählen, die Mikrolegierungselemente, wie Mangan, Nickel oder Kobalt enthalten, die unter oxidierender Atmosphäre zusammen mit Chrom aus dem Grundwerkstoff Spinellschichten bilden können. Spinellverbindungen können auch durch den Auftrag von manganhaltigen Schichten, die unter Reaktion mit Chromoxid zu Spinellverbindungen führen, gebildet werden. Die Bildung dieser Chrom-Spinell-Strukturen führt nachweisbar zu einer Reduzierung der Chromverdampfung. Diese ist aber immer noch nicht ausreichend, um eine lange Lebensdauer der Brennstoffzelle ohne Degradation zu gewährleisten, da es immer noch zur Chrom-Diffusion durch die chromhaltige Spinellschicht kommt. Außerdem können die Cr(VI)oxid- und Chromhydroxid- Spezies weiterhin wegen ihres hohen Cr-Anteils in der Spinellphase freigesetzt werden.

Trotzdem werden die chromfreien Spinellverbindungen als Schutzschichtwerkstoffe eingesetzt. So ist es beispielsweise aus DE 103 06 647 bekannt, dass durch Aufbringen von Oxiden, die in sich Co, Cu und/oder Mn enthalten, auf ein chromoxibildendes Substrat und Erwärmung bis auf 1000°C eine gasdichte, chromfreie Spinenellschicht der Zusammensetzung CO_{3-x-y}CuₓMn_{y}O₄ mit 0 < x < 1,5, 0 < y < 3 und (x + y) < 3 auf der Oberfläche des Substrats ausgebildet wird.

So ist es beispielsweise auch bekannt, dass eine Spinellschicht, umfassend einerseits ein Element aus der Gruppe (Mangan, Magnesium, Vanadium) und ein weiteres Element aus der Gruppe (Kobalt, Nickel, Eisen, Kupfer oder Vanadium), vorteilhaft eine derart gasdichte Schicht bildet, die auf einem chromoxidbildenden Substrat ausgebildet, selbst bei Temperaturen bis 1000°C ein Abdampfen von Chrom aus dem Substrat verhindern soll.

Aus DE 10 2005 015 755 A1 ist es bekannt, dass die Beschichtung einer chromoxidbildenden Legierung auf Cr oder FeCr-Basis, das weitere metallische Legierungen, wie Mangan oder Magnesium in Konzentration unterhalb von 5 Gew.-% enthält, mit wenigstens zwei Metallen aus der Gruppe Kobalt, Kupfer, Eisen, Nickel, Zink, Titan, Zinn oder Vanadium, bei Temperaturen zwischen 600° C und 1000° C und oxidierenden Betriebsbedingungen zur Bildung einer dünnen, chromfreien, gasdichten, elektrisch gut leitenden oxidischen Spinellschicht führt. Als mögliche Spinellphasen sind COₓCu_{y}Mn_{3-x-y}O₄, NiₓCu_{y}Mn_{3-x-y}O₄, CoₓFe_{y}Mn_{3-x-y}O₄, FeₓCu_{y}Mn_{3-x-y}O₄ mit 0≤ x ≤2, 0 ≤ y ≤1 und (x + y) < 3 genannt.

Die Reaktionen zur Bildung der Schutzschicht auf Basis von einer oder mehreren Komponenten des Substratmaterials haben aber den Nachteil, dass sie die Zusammensetzung des Substratwerkstoffs ändern.

Außerdem ist es bekannt (Journal of the Electrochemical Society 154-4 (2007), Seiten A295 - A306), dass Mangan auch intensiv von der Anodenseite des Interkonnektors verdampfen kann. Das kann zum schnellen Verbrauch des spinellbildenden Stoffs im Interkonnektorwerkstoff führen, so dass die auf der Oberfläche entstehende Schutzschicht nicht ausreichend homogen und dick ist, um die Chromabdampfung zuverlässig und nachhaltig zu verhindern.

Ein Mangel an einer Bestandkomponente löst oft die Bildung fremder Phasen neben der Spinellverbindung aus. Diese rufen auch eine Herabsetzung der mechanischen Festigkeit der Verbindung und damit unheilbare Risse in der Schicht insbesondere bei thermischer Belastung hervor. Das führt zur Erhöhung der Chromverdampfung und schneller Degradation der Brennstoffzelle beim Dauerbetrieb.

Außerdem ist es oft schwierig den thermischen Ausdehnungskoeffizient eines Schutzschichtstoffs und der Metalllegierung genau aufeinander anzupassen. Dadurch entstehen die Risse in der Schutzschicht bei der Thermozyklisierung der Brennstoffzelle, die die Dichtheit der Schicht verschlechtern.

Der Ansatz aller Erfindungen auf diesem Gebiet bestand in der Realisierung einer möglichst gasdichten Schutzschicht mit angepasstem thermischen Ausdehnungskoeffizienten und guter elektronischen Leitfähigkeit. Die Realisierung gasdichter Schutzschichten ist allerdings technisch höchstanspruchsvoll und in der Regel kostenintensiv.

Als Stand der Technik sind außerdem weitere nachfolgend genannte Dokumente bekannt:
So ist in WO 2006/059942 A1 ein Filmstreifen auf einer Oberfläche eines Perowskits oder Spinells für elektrische Kontakte beschrieben. Das Substrat kann dabei metallisch sein.

US 5,942,349 B betrifft einen Interkonnektor für Brennstoffzellen mit einer Beschichtung, in der ein Spinell enthalten ist.

Der Einsatz eines (Mn,Co)₃O₄ - Spinells für die Beschichtung von Elementen aus einem Stahl für Festoxidbrennstoffzellen ist von Zheng Yang u.a. in "(Mn,Co)3O4 spinel coatings on ferritic stainless steels of SOFC interconnect application"; INTERNATIONAL JOURNAL OF HYDROGEN ENERGY, ELSEVIER SCIENCE PUB-LISHER B.V., Barking, GB, Bd. 32, Nr. 16, 12. Oktober 2006 (2006-10-12), Seiten 3648-3654 beschrieben.

Zhenguo Yang u.a. zeigen in "Investigation of modified Ni-Cr-Mn base allaoys for SOFC interconnect applications", Journal oft he electrochemical society electrchem. Soc. USA; Bd. 153, Nr. 10, Oktober 2006, Seiten A1873-A1879; XP002518208, ISSN: 0013-4651 Möglichkeiten für den Einsatz eines Spinells mit einer Chromoxidschicht auf.

Aus DE 11 09 077 B ist ein Verfahren zur Herstellung ferromagnetischer Körper für elektrotechnische Zwecke mit praktisch rechteckiger Hystereseschleife und niedriger Koerzitivkraft bekannt.

Von 0. Bodak u.a. ist in "Micostructure, crystal structure and electrical properties of CuO0.1Ni0.8Co0.2Mn1.9O4 ceramics obtained at different sintering conditions", JOURNAL OF ALLOYS AND COM-POUNDS, ELSEVIER SEQUOIA, LAUSANNE, CH, Bd. 347, Nr. 1-2, 16. Dezember 2002, Seiten 14-23, XP 0043927, ISSN: 0925-8388 auf den Einfluss von unterschiedlichen Sinterbedingungen bei der Bildung von CuO_{0.1}Ni_{0.8}Co_{0.2}Mn_{1.9}O₄ hingewiesen.

Elektrische und thermische Eigenschaften von Spinellen sind von H. Ling u.a. in "Electrical and thermal properties of spinels", PROCEEDINGS - ELECTROCHEMICAL SOCIETY - SOLID OXIDE FUEL CELLS IX: MATERIALS - PROCEEDINGS OF THE INTERNATIONAL SYMPOSIUM, 2005, ELECTROCHEMICAL SOCIETY INC. US, Bd. PV 2005-07, 2005. Seiten 1866-1873, XP008103001 erläutert.

J.P. Caffin u.a. beschreiben in "Chemical preparation of N.T.C. thermistors with low resistivity and high stability", MATERIALS SCIENCE MONOGRAPHS, 38B(HIGH TECH CERAM., PT.B), 1743-51 CODEN: MSMODP; ISSN: 0166-6010, 1987, XP002518209 den Einfluss einer CuMnO₂ Phase an Korngrenzen einer Keramik.

Die Herstellung von Thermistoren mit NiO, MnO₂ und Cuo ist von S. Azimi u.a. in "Microstructure of nickel manganese oxide thermistors", MATERIALS SCIENCE MONOGRAPHS, 38B(HIGH TECH CERAM., PT.B), 1893-8 CODEN: MSMODP; ISSN 0166-6010, 1987, XP008103003 beschrieben.

Möglichkeiten zur Herstellung von Spinellen aus NiO, CuO, Fe₂O₃ und Mn₂O₃ sind von Kh. Roumaih u.a. in "Mossbauer studies of Cu1-xNixFeMnO4 spinel ferrites"; Journal of magnetism and magnetic materials; Elsevier science publishers; Amsterdam; NL; Bd. 288; 1. März 2005, Seiten 267-275; XP027842318, ISSN: 0304-8853 oder auch
von S. S. Ata-Allah u.a. in "Mössbauer effect studies of Ni1-xCuxMnyFe2-yO4 system"; Hyperfine actions; 1. Januar 2000; Seiten 467-479; XP055312742 bekannt.

Es ist daher Aufgabe der Erfindung, eine Schutzschicht für hochtemperaturbelastbare, chromoxidbildende Legierungen zur Verfügung zu stellen, die thermisch und mechanisch dauerhaft stabil ist und eine hohe elektrische Leitfähigket bei der Betriebstemperatur der Brennstoffzelle gewährleistet.

Der thermische Ausdehnungskoeffizient des Werkstoffes der Schutzschicht sollte dabei in dem für den Interkonnektor notwendigen optimalen Bereich (TEC_{RT..1000°=}9.8-12,4 ppm/K) durch die geringfügige Variation der Zusammensetzung bezüglich des thermischen Ausdehnungskoeffizienten einstellbar sein. Weiterhin soll der Werkstoff eine Gätterwirkung für Chromspezies in der Gasphase ausüben können, damit auch bei geringer Porosität der Schutzschicht eine Schutzwirkung gewährleistet werden kann.

Die Aufgabe wird durch die Merkmale des Patentanspruchs 1 gelöst. Eine mit dem Verfahren nach Anspruch 1 hergestellte Schutzschicht ist mit dem Anspruch 7 definiert.

Vorteilhafte Ausgestaltungen und Weiterbildungen der Erfindung können mit in untergeordneten Ansprüchen bezeichneten Merkmalen erreicht werden.

Erfindungsgemäß wird somit vorgeschlagen, einen oxidkeramischen Sinterwerkstoff zur Verfügung zu stellen, der aus einer Spinellphase und einer Nebenphase gebildet ist, wobei die Spinellphase durch eine Nickel-Kupfer-Mangan/Eisen-Verbindung und die Nebenphase durch eine oxidische, mangan-oxidische Verbindung gebildet sein soll.

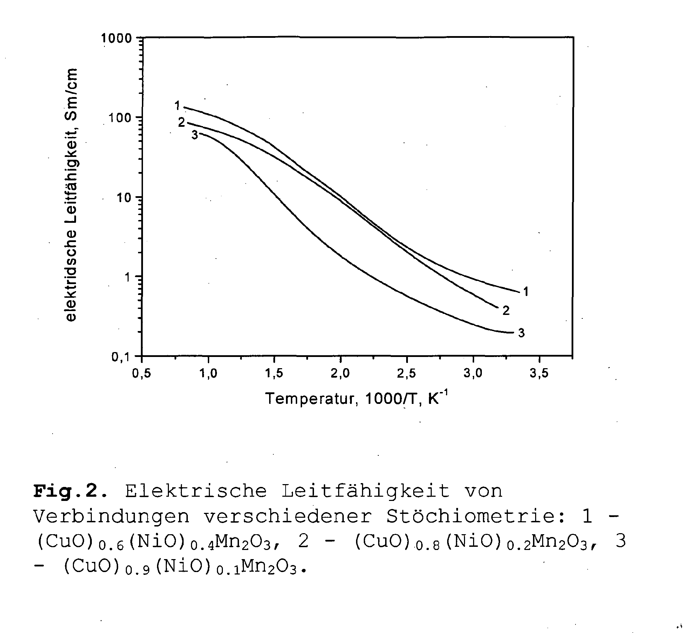

Der für die erfindungsgemäß hergestellte Schutzschicht eingesetzte Werkstoff mit einer Phase auf Basis von Nickel-Kupfer-Mangan/Eisen-Verbindung mit Spinell-Struktur erreicht eine ausreichend hohe elektrische Leitfähigkeit, die auch bei den erwähnten hohen Temperaturen beibehalten wird (Figur 2). Aufgrund der hohen elektrischen Leitfähigkeit kann der Werkstoff gleichzeitig als Kontaktschicht zur Kathodenoberfläche einer Kathoden-Elektroden-Anodeneinheit einer Hochtemperaturbrennstoffzelle eingesetzt werden. So sollte er eine
elektrische Leitfähigkeit von mindestens 10 S/cm, bevorzugt mindestens 80 S/cm bei einer Temperatur von 850° C, also im Betriebstemperaturbereich von Hochtemperaturbrennstoffzellen, erreichen.

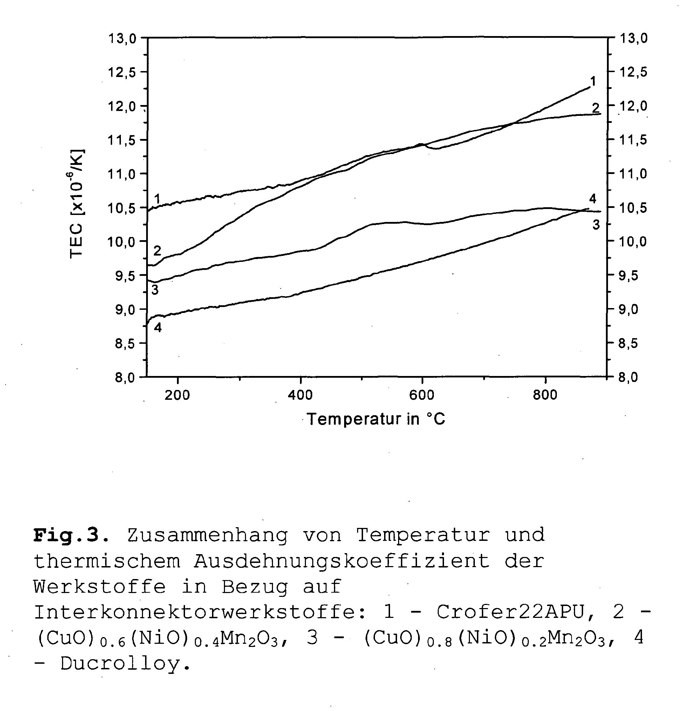

Dies trifft auch auf den thermischen Ausdehnungskoeffizienten unter Berücksichtigung des thermischen Ausdehnungskoeffizienten von Werkstoffen die für Interkonnektoren eingesetzt werden zu (Figur 3). Dies gewährleistet eine ausreichend hohe mechanische Stabilität der Strukturen in Verbindung mit dem Interkonnektorwerkstoffen bei den herrschenden thermischen Bedingungen.

Des Weiteren besitzt die Nebenphase auf Basis einer mangan-oxidischen Verbindung die Eigenschaft bei erwähnten hohen Temperaturen und vorliegender oxidierender Betriebsatmosphäre mit freigesetzten chromhaltigen Oxidverbindungen zu reagieren und somit gewährleistet sie den zusätzlichen Schutz gegen flüchtige Chrom-Spezies. Dadurch kann eine Sublimation des Chroms zur Kathode und somit eine Vergiftung der Kathode bzw. Grenzfläche Kathode/Elektrolyt durch Chrom effektiv verhindert werden.

Ein weiterer Vorteil einer Nebenphase auf Basis manganoxidischer Verbindung ist folgender: Sie kann als Quelle der notwendigen Komponenten (Mn) für die Metalllegierung dienen. Auf Grund der Mn-Verdampfung kann an der Anodenseite des Interkonnektors eine Mn-Verarmung stattfinden. Die Mn-Diffusion von der Kathodenseite zur Anodenseite kann bei Betriebstemperaturen dieses Prozesses deutlich minimiert werden.

Die Nebenphase sollte nur mit einem geringen Anteil im erfindungsgemäßen Werkstoff vorhanden sein. Die Reaktion zwischen Nebenphase und chromhaltigen Oxidverbindungen sollte keine wesentliche Wirkung auf die elektrischen und mechanischen Eigenschaften des Werkstoffes bei Dauerbetrieb haben.

Der für eine erfindungsgemäße Schutzschicht genutzte Werkstoff wird unter Einsatz von Kupfer(II)oxid (CuO), Nickel(II)oxid (NiO) und Mangan(III)oxid (Mn₂O₃)/Eisen (III) oxid (Fe₂O₃), bei einer Wärmebehandlung an Luft oder an Sauerstoff enthaltender Atmosphäre durch eine Festkörperreaktion gebildet. Sie sollen dabei als Pulver eingesetzt werden.

Der Anteil an Mn₂O₃ sollte bevorzugt im Bereich 1 bis 100 Mol.-% liegen.

Der Auftrag auf ein Substrat kann beispielsweise auch mittels thermischen Spritzen oder ein Beschichtungsverfahren im Vakuum erfolgen. Letztgenanntes kann beispielsweise mittels an sich bekannter PVD- oder auch CVD-Technologie erfolgen. Dabei kann aus dem Pulver ein geeignetes Target hergestellt und damit so beschichtet werden.

Die entsprechenden Anteile der Oxide sollen durch die sorgfältige dauerhafte Durchmischung/Homogenisierung z.B. in der Planetenkugelmühle vorbehandelt sein. Beim Herstellungsverfahren ist dabei zu beachten, ob zusätzliche Medien bei der Vorbehandlung vorhanden sind. Es hat sich überraschenderweise herausgestellt, dass durch ein Zumischen von Ethanol zu den Pulvern entweder ein einphasiger oder zweiphasiger Werkstoff in Abhängigkeit des Verhältnises von CuO zu NiO erhalten werden kann. Durch zusätzlichen Einsatz von Alkohol/Ethanol kann der Anteil einer zweiten Phase (Nebenphase) erhöht werden.

Die Festkörperreaktion konnte bereits bei einer Temperatur von 800°C initiiert werden und eine Sinterung der Pulverkomponenten trat bei Temperaturen ab mindestens 1000° C auf. Beim Herstellungsverfahren ist es auch wichtig, dass definierte Kalzinierungstemperaturen eingehalten werden, da der bei tieferen (<1000°C) und höheren (>1200°C) Temperaturen synthetisierte Werkstoff mehrphasig und dadurch thermisch und chemisch instabil ist. Es hat sich gezeigt, dass es besonders günstig ist, wenn die Synthese bei 1100°C ± 10°C durchgeführt wird.

Die Erfindung wird nachfolgend anhand von Ausführungsbeispielen näher erläutert werden.

### Ausführungsbeispiel 1:

Herstellung einer Verbindung mit einem Anteil an Nebenphase unter 2,0 Mol.-%:
Es werden 2,0268 g CuO, 1,2688 g NiO und 6,7044 g Mn203, was dem Komponentenverhältnis (CuO)_{0.6}(NiO)_{0.4}(Mn₂O₃) entspricht, eingewogen und über einen Zeitraum von 24 Stunden in der Planetenkugelmühle homogenisiert. Das homogene Pulver wird gesiebt und bei der Temperatur 1100° C 15 Stunden kalziniert.

Der so hergestellte Werkstoff weist eine Zusammensetzung der Spinellphase Cu_{0.6}Ni_{0.4}Mn₂O₄ auf. Der Anteil der Nebenphase (MnOₓ)_{1-y} + (CuO/NiO)_{y} (1<x<1,5 und 0<y<0,5) liegt dabei unter 2,0 Mol.-%.

### Ausführungsbeispiel 2:

Herstellung einer Verbindung mit einem Anteil an Nebenphase 2,0 bis 5,0 Mol.-%:
Es werden 2,0268 g CuO, 1,2688 g NiO und 6,7044 g Mn203, was dem Komponentenverhältnis (CuO)_{0.6}(NiO)_{0.4}(Mn₂O₃) entspricht, eingewogen, denen 10 ml Ethanol zugemischt und über einen Zeitraum von 24 Stunden in der Planetenkugelmühle homogenisiert.

Das homogene Pulver wird bei der Temperatur von 70°C getrocknet und danach gesiebt. Das gesiebte Pulver wird bei der Temperatur 1100° C 15 Stunden kalziniert.

Der so hergestellte Werkstoff weist eine Zusammensetzung der Spinellphase Cu_{0.6}Ni_{0.4}Mn₂O₄ auf. Der Anteil der Nebenphase (MnOₓ)_{1-y} + (CuO/NiO)_{y} (1<x<1,5 und 0<y<0,5) erreicht dabei 2,0 und 5,0 Mol.-%.

### Ausführungsbeispiel 3:

Für die Herstellung eines Werkstoffs mit einem Anteil an Nebenphase unterhalb von 2,0 Mol.-% wurden 2,6893 g CuO, 0,6313 g NiO, 6,3382 g Mn₂O₃ und 0,6748 g Fe₂O₃ eingewogen, um ein Verhältnis der Komponenten (CuO)_{0,8} (NiO)_{0,2} (Mn₂O₃)_{0,95}(Fe₂O₃)_{0,1} zu erreichen. Die Mischung wurde mit 10 ml Ethanol versetzt und über einen Zeitraum von 24 h in einer Planetenkugelmühle homogenisiert. Anschließend erfolgte eine Trocknung bei einer Temperatur von 70°C. Das dann gesiebte Pulver wurde bei einer Temperatur von 1100°C über einen Zeitraum von 15 h einer Wärmebehandlung unterzogen. Der so erhaltene Werkstoff wies eine Zusammensetzung der Spinellphase Cu_{0,8}Ni_{0,2}Mn_{0,9}Fe_{0,1}O₄ auf. Der Anteil der Nebenphase (MnOₓ)_{1-y} + (CuO/NiO)_{y} (1< x < 1,5 und 0 < y < 0,5) lag bei unterhalb 2,0 Mol.-%.

Dabei zeigen:
- Figur 1: Röntgendiffraktogramme eines synthetisierten Werkstoffs einer erfindungsgemäß hergestellten Schutzschicht.
- Figur 2: ein Diagramm mit der temepraturabhängigen elektrischen Leitfähigkeit für verschiedene Verbindungen.
- Figur 3: ein Diagramm, das den Zusammenhang von Temperatur und thermischen Ausdehnungskoeffizient von Werkstoffen in Bezug zu Sonderstahl Crofer22APU und DucrolloyLegierung wieder gibt;
- Figur 4a: einen Schichtaufbau als Schliffbild und.
- Figur 4b: EDX-Spektren von Schichtsystemen auf einem Substrat Crofer22APU nach einer thermischen Behandlung

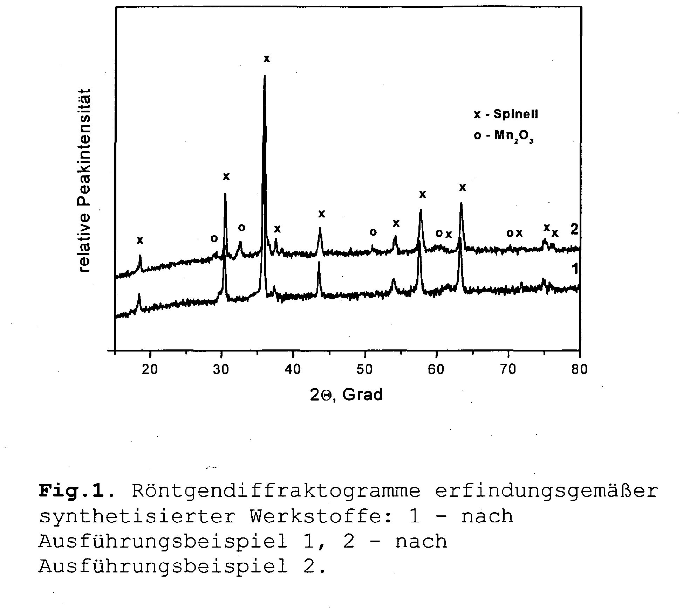

Mit den in Figur 1 gezeigten Röntgendiffraktogrammen wird deutlich, dass die Phasenzusammensetzung des bei 1100° C gesinterten Werkstoffes vom Herstellungsverfahren abhängig ist. Diagramme 1 und 2 entsprechen der Verbindung, die mit der Stöchiometrie (CuO)_{0.6} (NiO)_{0.4} (Mn₂O₃) nach Ausführungsbeispiel 1 bzw. 2 hergestellt sind.

Der Zusammenhang von Temperatur und elektrischer Leitfähigkeit ist für Verbindungen (CuO)ₓ(NiO)_{y}(Mn₂O₃) mit verschiedenem Verhältnis CuO/NiO im Diagramm gemäß Figur 2 verdeutlicht.

Aus dem in Figur 3 gezeigten Diagramm ist die Wärmeausdehnung von (CuO)ₓ(NiO)_{y}(Mn₂O₃) mit unterschiedlichen Verhältnissen von CuO/NiO in Bezug auf Sonderstähle Crofer22APU und Ducrolloy-Legierung im Temperaturbereich von 0 bis 900 °C angegeben und es wird deutlich, dass nur geringfügige Differenzen der thermischen Ausdehnungskoeffizienten dieser Werkstoffe bei der Betriebstemperatur vorhanden sind, so dass sie problemlos miteinander in Kombination auch bei Hochtemperaturbrennstoffzellen eingesetzt werden können.

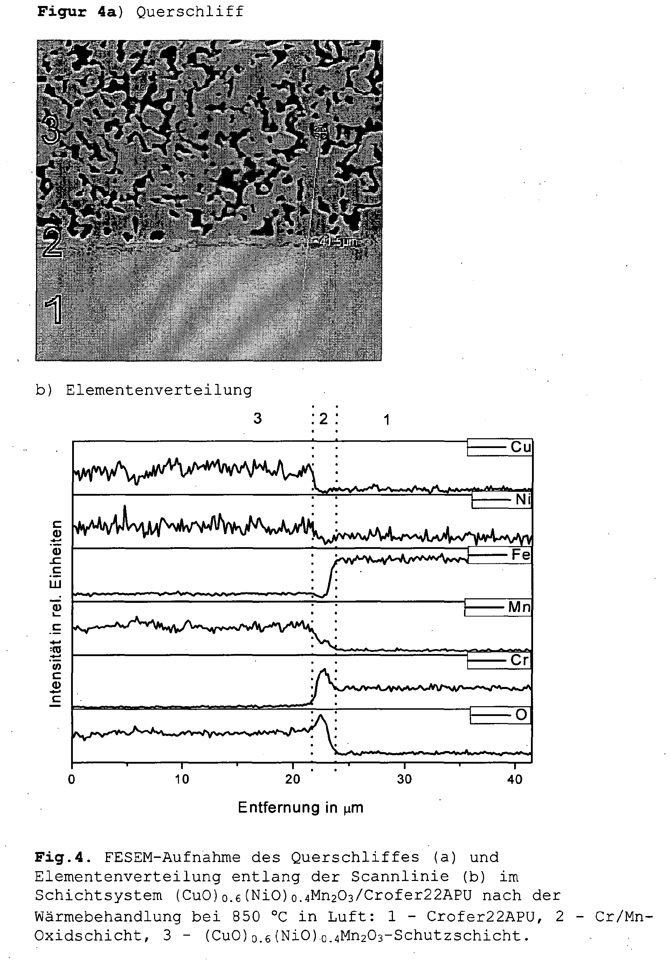

Die Figur 4 a zeigt den typischen Aufbau des Schichtsystems, welches sich auf dem mit der Schutzschicht bedeckten Substrat nach der Thermobehandlung bei 850 °C für 100 h in Luft ausbildet. Der Werkstoff nach Ausführungsbeispiel 1 wurde durch Roll-Coating auf das Substrat Crofer22APU aufgebracht. Die dazugehörigen EDX-Elementprofile für 0, Cr, Mn, Fe, Cu, Ni (Fig. 4b) zeigen deutlich den Schichtaufbau.

An der Grenze zwischen Substrat (Bereich 1) und Schutzschicht hat sich eine dünne Chrom/Mangan-Mischoxidschicht ausgebildet (Bereich 2). Die äußere Schicht (Bereich 3) enthält keine mittels EDX nachweisbaren Anteile von Chrom.

Aufgrund ihrer chemischen, thermischen und elektrischen Eigenschaften kann der Werkstoff für chromaufhaltende Schutzschichten in Hochtemperaturbrennstoffzellen eingesetzt werden.

## Patentansprüche

1. Verfahren zur Herstellung einer Schutzschicht auf hochtemperaturbelastbaren, chromoxidbildenden Substraten, **dadurch gekennzeichnet, dass** ein aus den Oxiden CuO, NiO, Fe₂O₃ und Mn₂O₃ gebildetes Pulvergemisch einer homogenisierenden Vorbehandlung und nachfolgend einer Wärmebehandlung bei Temperaturen im Bereich von 1000ºC bis 1200ºC zur Ausbildung eines Werkstoffes unterzogen wird,
wobei der Werkstoff für die Schutzschicht aus einer Spinellphase und einer oxydischen Nebenphase gebildet ist,
wobei die Spinellphase mit einer oxidischen Nickel-Kupfer-Mangan/EisenVerbindung mit der Zusammensetzung (CuₓNi₁₋ₓ)_{y}(Mn_{1-z}Fe_{z})₂O₄ mit 0 < x < 1,0, 0,8 < y < 1,2 und 0,0 ≤ z < 1,0 gebildet ist, wobei die Nebenphase mit einer manganhaltigen oxydischen Verbindung gebildet ist und dass die Nebenphase mit einem Anteil von 0,1 Vol.-% bis 20 Vol.-% enthalten ist,
wobei das Pulvergemisch nach der homogenisierenden Vorbehandlung auf die Oberfläche eines hochtemperaturbelastbaren, chromoxidbildenden Substrates aufgetragen und dann die Ausbildung einer Schutzschicht auf dem Substrat durch die Wärmebehandlung erreicht wird.

2. Verfahren nach Anspruch 1, **dadurch gekennzeichnet, dass** die Nebenphase in der Spinellphase homogen verteilt ist.

3. Verfahren nach einem der vorhergehenden Ansprüche, **dadurch gekennzeichnet, dass** der Werkstoff eine elektrische Leitfähigkeit von mindestens 10 S/cm bei einer Temperatur von 850 ºC aufweist.

4. Verfahren nach einem der vorhergehenden Ansprüche, **dadurch gekennzeichnet, dass** die homogenisierende Vorbehandlung durch Mahlen durchgeführt wird.

5. Verfahren nach einem der vorhergehenden Ansprüche, **dadurch gekennzeichnet, dass** dem Pulvergemisch bei der homogenisierenden Vorbehandlung ein Alkohol zugegeben wird.

6. Verfahren nach einem der vorhergehenden Ansprüche, **dadurch gekennzeichnet, dass** das Pulvergemisch nach der homogenisierenden Vorbehandlung auf die Oberfläche des Substrates mittels thermischen Spritzens oder einem Beschichtungsverfahren im Vakuum aufgetragen wird.

7. Schutzschicht auf einem hochtemperaturbelastbaren, chromoxidbildenden Substrat, hergestellt nach dem Verfahren der Ansprüche 1-6.

## Claims

1. Process for producing a protective layer on high-temperature-resistant, chromium oxide-forming substrates, **characterized in that** a powder mixture formed from the oxides CuO, NiO, Fe₂O₃ and Mn₂O₃ is subjected to a homogenizing pretreatment and subsequently to a heat treatment at temperatures in the range from 1000°C to 1200°C to form a material,
wherein the material for the protective layer is formed from a spinel phase and an oxidic secondary phase,
wherein the spinel phase is formed by an oxidic nickel-copper-manganese/iron compound having the composition
(CuₓNi₁₋ₓ)_{y} (Mn_{1-z}Fe_{z})₂O₄ with 0 < x < 1.0, 0.8 < y < 1.2 and 0.0 ≤ z < 1.0,
wherein the secondary phase is formed by a manganese-containing oxidic compound and the secondary phase is present in a proportion of 0.1% by volume to 20% by volume,
wherein the powder mixture after the homogenizing pretreatment is applied to the surface of a high-temperature-resistant, chromium oxide-forming substrate and then the formation of a protective layer on the substrate is achieved by the heat treatment.

2. Process according to Claim 1, **characterized in that** the secondary phase is distributed homogeneously in the spinel phase.

3. Process according to either of the preceding claims, **characterized in that** the material has an electrical conductivity of at least 10 S/cm at a temperature of 850°C.

4. Process according to any of the preceding claims, **characterized in that** the homogenizing pretreatment is conducted by grinding.

5. Process according to any of the preceding claims, **characterized in that** an alcohol is added to the powder mixture in the homogenizing pretreatment.

6. Process according to any of the preceding claims, **characterized in that** the powder mixture after the homogenizing pretreatment is applied to the surface of the substrate by means of thermal spraying or a coating process under reduced pressure.

7. Protective layer on a high-temperature-resistant, chromium oxide-forming substrate, produced by the process of Claims 1-6.

## Revendications

1. Procédé de fabrication d'une couche de protection sur des substrats résistants aux hautes températures, formant de l'oxyde de chrome, **caractérisé en ce qu'**on soumet un mélange de poudres formé des oxydes CuO, NiO, Fe₂O₃ et Mn₂O₃ à un prétraitement d'homogénéisation, puis à un traitement thermique à des températures comprises dans la plage de 1000 °C à 1200 °C, pour former un matériau,
le matériau destiné à la couche de protection étant formé d'une phase spinelle et d'une phase secondaire oxyde,
la phase spinelle étant formée avec un composé oxyde de nickel-cuivre-manganèse/fer ayant la composition
(CuₓNi₁₋ₓ)_{y}(Mn_{1-z}Fe_{z})₂O₄ avec 0 < x < 1,0, 0,8 < y < 1,2 et 0,0 ≤ z < 1,0,
la phase secondaire étant formée avec un composé oxyde contenant du manganèse, et **en ce que** la phase secondaire est présente selon une proportion de 0,1 % en volume à 20 % en volume,
le mélange de poudres étant, après le prétraitement d'homogénéisation, appliqué sur la surface d'un substrat résistant aux hautes températures, formant de l'oxyde de chrome, puis la formation d'une couche de protection sur le substrat étant réalisée sous l'effet du traitement thermique.

2. Procédé selon la revendication 1, **caractérisé en ce que** la phase secondaire est répartie d'une manière homogène dans la phase spinelle.

3. Procédé selon l'une des revendications précédentes, **caractérisé en ce que** le matériau présente une conductivité électrique d'au moins 10 S/cm à une température de 850 °C.

4. Procédé selon l'une des revendications précédentes, **caractérisé en ce que** le prétraitement d'homogénéisation est réalisé par broyage.

5. Procédé selon l'une des revendications précédentes, **caractérisé en ce que**, lors du prétraitement d'homogénéisation, on ajoute un alcool au mélange de poudres.

6. Procédé selon l'une des revendications précédentes, **caractérisé en ce que** le mélange de poudres est, après le prétraitement d'homogénéisation, appliqué sur la surface du substrat par pulvérisation thermique ou par un procédé de revêtement sous vide.

7. Couche de protection sur un substrat résistant aux hautes températures, formant de l'oxyde de chrome, fabriquée par le procédé selon les revendications 1 à 6.
